# EUROPÄISCHE PATENTSCHRIFT

(11) **EP 1 073 180 B1**
(45) Veröffentlichungstag und Bekanntmachung des Hinweises auf die Patenterteilung: **30.01.2002**
(21) Anmeldenummer: 99114931.1
(22) Anmeldetag: 30.07.1999
(51) Int. Cl.: H02K 3/34

(54) **Isolation zwischen einem genuteten Blechpaket und einer in dessen Nuten unter Bildung von Stirnverbindungen einzubringenden Wicklung**
Insulation between an iron core with slots and a winding formed in the slots and provided with winding heads
Isolation entre un paquet de tôles avec encoches et un enroulement avec têtes d'enroulement formé dans ces encoches

(43) Veröffentlichungstag der Anmeldung: 31.01.2001
(73) Patentinhaber: SIEMENS AKTIENGESELLSCHAFT, 80333 München (DE)
(72) Erfinder: Seuffert, Werner, 97493 Bergrheinfeld (DE); Gastl, Peter, 97236 Randersacker (DE)

(56) Entgegenhaltungen:
- JP-A- 58 157 349
- US-A- 1 695 862
- US-A- 2 473 332
- PATENT ABSTRACTS OF JAPAN vol. 007, no. 280 (E-216), 14. Dezember 1983 (1983-12-14) & JP 58 157349 A (TOKYO SHIBAURA DENKI KK), 19. September 1983 (1983-09-19)

## Beschreibung

Isolationsanordnung zwischen einem axial durchgehend und nach radial außen offen genuteten Blechpaket und einer in dessen Nuten unter Bildung von Stirnverbindungen einzubringenden Wicklung

Die Erfindung bezieht sich auf eine Isolationsanordnung zwischen einem axial durchgehend und nach radial außen offen genuteten Blechpaket, insbesondere Rotorblechpaket und/oder Statorblechpaket eines Elektromotors, und einer in dessen Nuten unter Bildung von Stirnverbindungen einzubringenden Wicklung gemäß Patentanspruch 1.

Es ist bekannt, zur Isolation zwischen einem genuteten Blechpaket und der in die Nuten unter Bildung von Stirnverbindungen einzubringenden Wicklung einerseits Nut-Isolationshülsen mit isolierender Anlage an den nutinneren Blechpaketflächen und andererseits Isolierendscheiben mit isolierender Anlage an den nutäußeren Blechpaketflächen im Bereich der Stirnflächen des Blechpaketes vorzusehen.

Durch die US-A 2 473 332 ist eine Isolierung zwischen einem axial durchgehend und nach radial.außen offen genuteten Blechpaket einerseits und einer in dessen Nuten unter Bildung von Stirnverbindungen einzubringenden Wicklung andererseits in Form von durch Umbiegen bzw. Umfalten aus einem flächigen Stück mit kurzen stirnseitigen Kantenumfassungen der Blechpaket-Nuten herstellbaren, in die Nuten von radial außen einzubringenden Nutauskleidungen bekannt.

Zur Fertigungsvereinfachung und Bauteileminderung ist es auch bereits bekannt (DT 25 11 606 B1), an jede stirnseitige Isolierendscheibe eine Nut-Isolationshülse anzuformen, der bei auf das Blechpaket bzw. auf eine dieses aufnehmende Welle geschobener Halterung mit seinem freien Hülsenende bis zu einer derartigen axialen Tiefe in die jeweilige Nut ragt, daß eine hinreichende Isolierung für die anschließend in die Nut einzubringende, insbesondere von einem Flyer automatisch und fortlaufend mit einem bestimmten Wicklungsschritt einzuwickelnde, Wicklung gewährleistet ist.

Gemäß Aufgabe vorliegender Erfindung soll der fertigungstechnische Aufwand, insbesondere im Hinblick auf den Einsatz von Fertigungsautomaten, zur Gewährleistung einer sicheren Isolierung zwischen dem genuteten Blechpaket und der Wicklung weiter gemindert werden.

Die Lösung der Aufgabe gelingt erfindungsgemäß durch eine Isolierung gemäß Patentanspruch 1; vorteilhafte Ausgestaltungen der Erfindung sind jeweils Gegenstand der Unteransprüche.

Die erfindungsgemäße Isolation erlaubt bei Handhabung nur eines einzigen Isolationsstückes je Nut sowohl die nutinnere als auch die nutäußere, blechpaketstirnseitige Isolation, wobei der komplette Isolationskörper zweckmäßigerweise aus einem flächigen Isolationsrohmaterial, vorzugsweise von einer Bandrolle abgewickelt, mit solcher Formgebung ausgestanzt ist, daß durch Wegbiegen der Wandteile von einer zur Isolation des Nutgrunds vorgesehenen Isolations-Grundfläche das dreidimensionale Isolationsstück auf einfache Weise bildbar ist. Die Biege- bzw. Gelenkachsen zur Faltung der Wandteile sind nach einer Ausgestaltung der Erfindung durch in das noch flächige Isolationsmaterial eingedrückte bzw. eingeprägte Biegefalzen im Sinne von Filmscharnieren vorgesehen. Von der von der Isolations-Grundfläche abgebogenen ersten Wandteilen können nach einer weiteren erfindungsgemäßen Ausgestaltung weitere zweite Wandteile abbiegbar angeformt sein.

Die Erfindung sowie weitere vorteilhafte Ausgestaltungen der Erfindung gemäß Merkmalen der Unteransprüche werden im folgenden anhand schematischer Ausführungsbeispiele in der Zeichnung näher erläutert; darin zeigen:
- FIG 1: die stirnseitige Draufsicht auf ein Blechpaket mit elf bereits mit je einem Isolationsstück versehenen Nuten und einer noch entsprechend zu bestückenden Nut;
- FIG 2: ein flächig ausgestanztes Isolationsstück-Rohteil mit durch Trennschnitte und Biegefalzen einstückig gelenkig angeformten Wandteilen vor ihrer Abfaltung in ihre dreidimensionale Raumform-Zuordnung;
- FIG 3-7: verschiedene aufeinanderfolgende Faltschritte zur Herstellung eines dreidimensionalen Isolationsstücks gemäß FIG 1 aus einem Isolationsstück-Rohteil gemäß FIG 2.

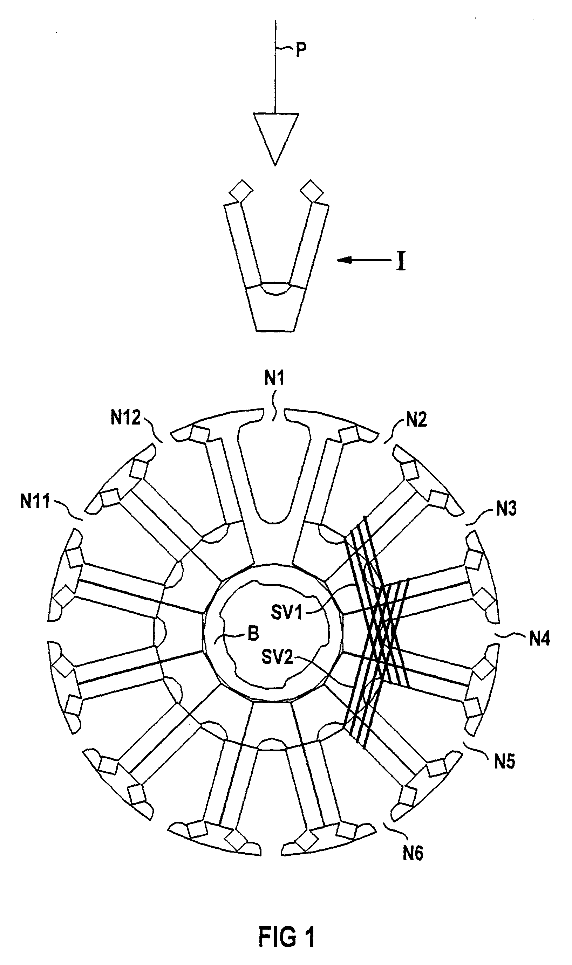

FIG 1 zeigt die axiale Draufsicht auf ein Blechpaket B eines Elektromotor-Rotors mit zwölf Nuten N1-N12, von den die Nuten N2-N12 bereits derart mit je einem dreidimensionalen Isolationsstück I bestückt sind, wie dies hinsichtlich des radialen Eindrückens mit einer Kraft P eines Isolationsstücks I in eine einzelene Nut N1 in Explosionsdarstellung erläutert ist. Die in die Nuten N1-N12 einzubringende, vorzugsweise von einem Flyer einzuwickelnde, Wicklung ist durch zwei Stirnverbindungen SV1 bzw. SV2 zwischen den Nuten N2-N5 bzw. N3-N6 angedeutet. Die erfindungsgemäße Isolation soll die angedeutete Wicklung gegenüber dem Blechpaket B sowohl nutinnen als auch nutaußen im entsprechenden Stirnflächenbereich elektrisch isolieren und schützen.

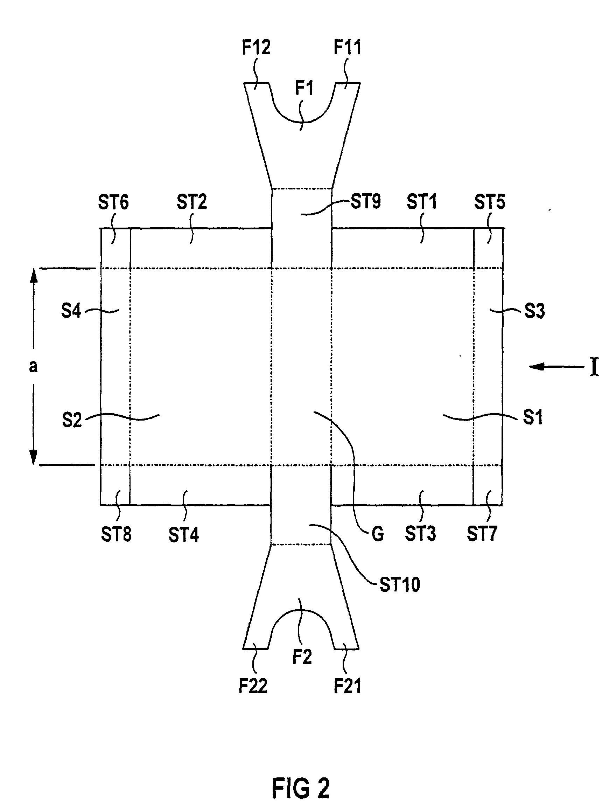

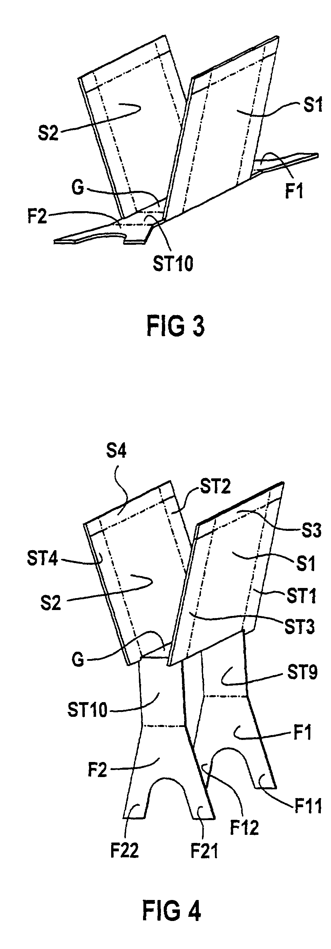

Die betriebsmäßig dreidimensionalen Isolierungsstücke I sind gemäß FIG 2 zweckmäßigerweise aus einem Isolationsflachmaterial, vorzugsweise nach Abrollen von einer Vorratsrolle, flächig ausgestanzt und mit Trennschnitten (ausgezogene Linienkontur) und Biegefalzen (strichpunktierte Linienkontur) derart versehen, daß sämtliche isolierenden Wandteile S1-S4; ST1-ST10 unmittelbar bzw. mittelbar - wie im folgenden anhand der Figuren 3-7 näher erläutert - vorzugsweise maschinell bzw. automatisierbar von einer Isolations-Grundfläche G gelenkartig abfaltbar und in ihre gegenseitige Raumform-Zuordnung bringbar und dieser Stellung gegebenenfalls zueinander fixierbar sind.

Gemäß FIG 3 sind von einer vorzugsweise den Nutgrund isolierenden Isolations-Grundfläche G die inneren tangentialen Nutseitenflächen isolierende erste Seiten-Wandteile S1;S2 einstückig abfaltbar; die vorzugsweise entlang der Faltung eingeprägten Biegelfalzen erlauben dabei eine genaue und leicht handhabbare Filmscharnier-Gelenkverbindung. Durch einen entsprechenden axialen Überstand der ersten Seitenwandteile S1;S2 könnte an sich ein hinreichener Isolationsabstand zwischen der Wicklung und der Stirnfläche des Blechpaketes B erreicht werden. Zur isolierenden Abdeckung der Stirnfläche des Blechpaketes B radial unterhalb der Isolations-Grundfläche G sind an diese nach radial innen abfaltbare, die benachbarten Stirnflächenteile der Stirnseite des Blechpaketes B isolierende erste Stirnflächen-Wandteile ST9-ST10 vorgesehen.

An die radialen Enden der ersten Stirnflächen-Wandteile ST9-ST10 sind radiale Verlängerungen derart angeformt, daß diese als Fixier-Teile F1;F2 radial wieder zurückfaltbar und in ihrer Falt-Endposition mit gabelförmigen Fixier-Enden F11,F12;F21,F22 außen an die, u.U. entsprechend axial über die Nutlänge überstehenden, ersten Seiten-Wandteile S1;S2 anlegbar sind.

Im Sinne einer größeren Kompaktheit bei gleichzeitig einfacher Fertigung sind jedoch nach einer weiteren Ausgestaltung an den axial äußeren Bereichen der ersten Seiten-Wandteile S1;S2 im Bereich der axialen Nutenden derart abfaltbare isolierende zweite Stirnflächen-Wandteile ST1-ST4 angelenkt, daß nach Umlegen die nutinneren isolierenden Seiten-Wandteile S1;S2 in entsprechende randseitige isolierende zweite Stirnflächen-Wandteile ST1-ST4 übergehen.

Durch Hintergreifen der Fixierenden F11,F12;F21,F22 hinter die umgelegten zweiten Stirnflächen-Wandteile ST1-ST4 bzw. nach Umlegen der zweiten Stirnflächen-Wandteile ST1-ST4 vor die zuvor hochgefalteten Fixierenden F11,F12;F21,F22 lassen sich einerseits die ersten Seiten-Wandteile S1;S2 an die gabelförmigen Fixierenden abstützend anlegen und andererseits sämtliche Wandteile in ihrer betriebsmäßigen endgültigen Raumteilzuordnung fixieren, ohne eine Nachgiebigkeit beim radialen Einstecken der Isolationskörper I in die Nuten N1-N12 zu behindern.

Bei einem teilweisen Nutverschluß an den zur Einbringung der Wicklung an sich radial offenen Nuten N1-N12 sind von den ersten Seiten-Wandteilen S1;S2 radial außenseitig gelenkartig abfaltbare, die nutseitigen Innenflächen der Nutverschlüsse isolierende dritte Seiten-Wandteile S3;S4 einstückig angeformt; zur kompakten Isolierabdeckung auch der Stirnflächen des Blechpaketes B in diesem Bereich sind von den zweiten Seiten-Wandteilen S3;S4 nutendseitig abfaltbare, die entsprechenden benachbarten Stirnflächenteile des Blechpaketes B isolierende dritte Stirnflächen-Wandteile ST5-ST8 vorgesehen.

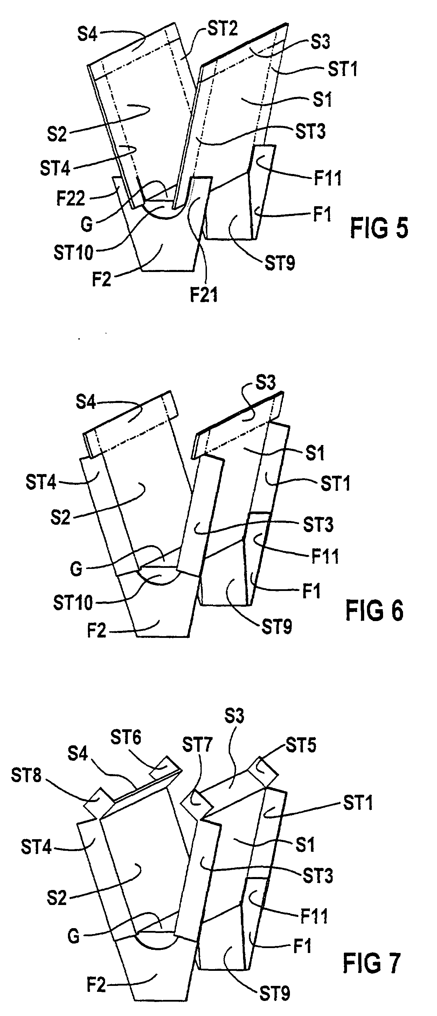

Die fortlaufenden Figuren 2-7 zeigen eine vorteilhafte Handhabungsreihenfolge zur Bildung der Raumform eines dreidimensionalen Isolationsstückes I gemäß FIG 7 aus einem Isolationsflachmaterial gemäß FIG 2; ein solches, sämtliche Isolierungen gewährleistendes Isolationsstück I kann dann gemäß FIG 1 jeweils in die Nuten N1-N12 mit einer Kraft P eingedrückt werden.

Eine Anpassung an unterschiedliche Paketlängen kann auf einfache Weise durch entsprechende Wahl der axialen Länge a der ersten Seiten-Wandteile bzw. der Isolations-Grundfläche G erreicht werden.

## Patentansprüche

1. Isolationsanordnung zwischen einem axial durchgehend und dazu senkrecht nach radial außen offen genuteten Blechpaket (B), insbesondere Rotorblechpaket und/oder Statorblechpaket eines Elektromotors, und einer in dessen Nuten (N1-N12) unter Bildung von Stirnverbindungen (SV1;SV2) an den Stirnseiten des Blechpaketes einzubringenden Wicklung,
- mit einem in jede Nut (N1-N12) radial einsteckbaren einteiligen Isolationskörper (I) mit außenseitig an eine den Nutgrund isolierenden Isolations-Grundfläche (G) unmittelbar bzw. mittelbar angelenkten und als Isolation zumindest der nutinneren als auch der nutäußeren Blechpaketflächen gegenüber der einzubringenden Wicklung umfaltbaren ersten bzw. zweiten Seitenwandteilen (S1,S2;S3,S4) und ersten bzw. zweiten bzw. dritten Stirnflächen-Wandteilen (ST9,ST10;ST1-ST4;ST5-ST8),
- mit von der Isolations-Grundfläche (G) an ihren axialen Außenkanten hochfaltbaren, jeweils die Seitenflächen der Nut (N1-N12) isolierenden ersten Seiten-Wandteilen (S1;S2).
- mit von der Isolations-Grundfläche (G) nutstirnseitig nach radial innen abfaltbaren, die benachbarten Stirnflächenteile der Stirnseite des Blechpaketes (B) isolierenden ersten Stirnflächen-Wandteilen (ST9-ST10).
- mit derartigen radialen Verlängerungen als Teil der freien Enden der ersten Stirnflächen-Wandteile (ST9-ST10), daß diese als Fixier-Teile (F1;F2) radial wieder zurückfaltbar und in ihrer Falt-Endposition, insbesondere mit gabelförmigen Fixier-Enden (F11,F12; F21,F22), nutstirnseitig an die Außenseiten der ersten Seiten-Wandteile (S1;S2) anlegbar sind.

2. Isolationsanordnung nach Anspruch 1
- mit von den ersten Seiten-Wandteilen (S1;S2) nutendseitig abfaltbaren, die benachbarten Stirnflächenteile der Stirnseite des Blechpaketes (B) isolierenden zweiten Stirnflächen-Wandteilen (ST1-ST4).

3. Isolationsanordnung nach Anspruch 1 und/oder 2
- mit von den ersten Seiten-Wandteilen (S1;S2) radial außenseitig abfaltbaren, die Innenflächen von Nutverschlüssen isolierenden zweiten Seiten-Wandteilen (S3;S4).

4. Isolationsanordnung nach Anspruch 3
- mit von den zweiten Seiten-Wandteilen (S3;S4) nutendseitig abfaltbaren, die benachbarten Stirnflächenteile der Stirnseite des Blechpaketes (B) isolierenden dritten Stirnflächen-Wandteilen (ST5-ST8).

5. Isolationsanordnung nach zumindest einem der Ansprüche 1-4
- mit einer Fixierung der gabelförmigen Fixier-Enden (F11,F12;F21,F22) in ihrer Falt-Endposition.

6. Isolationsanordnung nach Anspruch 5 und 2
- mit einer Fixierung durch axiales Hintergreifen der Fixier-Enden (F11,F12;F21,F22) hinter die zweiten Stirnflächen-Wandteile (ST1-ST4).

7. Isolationsanordnung nach zumindest einem der Ansprüche 1-6
- mit einer Bildung des Isolationskörpers (I) aus einem sämtliche Isolations-Wandteile (G;S1-S4;ST1-ST10) umfassenden ausgestanzten bzw. freigeschnittenen und mit Biegefalzen bzw. Trennschnitten für die ab- bzw. wegbiegbaren Isolations-Wandteile versehenen Isolations-Flachteil.

## Claims

1. Insulation arrangement between a laminated core (B), which is slotted axially continuously and, at right angles to this, radially outwards where it is open, in particular a rotor laminated core and/or a stator laminated core of an electric motor, and a winding which can be fitted in its slots (N1-N12) forming end connections (SV1; SV2) on the end faces of the laminated core,
- having an integral insulation body (I), which can be inserted radially into each slot (N1-N12) with first and second side wall parts (S1, 32; S3, S4) which are articulated directly or indirectly externally on an insulation base surface (G) which insulates the slot base and, as insulation at least of the laminated core surfaces inside and outside the slots, can be folded around the winding which is to be introduced, and having first, second and third end surface wall parts (ST9, ST10; ST1-ST4; ST5-ST8),
- having first side wall parts (S1; S2) which can be folded up from the insulation base surface (G) at their axial outer edges and each insulate the side surfaces of the slot (N1-N12),
- having first end surface wall parts (ST9-ST10), which can be folded radially inwards from the insulation base surface (G) on the slot end face and insulate the adjacent end surface parts of the end face of the laminated core (B),
- having radial extensions, as part of the free ends of the first end surface wall parts (ST9-ST10), such that these can be folded back again radially as fixing parts (F1; F2), and, in their folded end position, can be placed, in particular by means of fixing ends (F11, F12; F21, F22) which are in the form of forks, on the slot end face against the outsides of the first side wall parts (S1; S2).

2. Insulation arrangement according to Claim 1,
- having second end surface wall parts (ST1-ST4) which can be folded away from the first side wall parts (S1; S2) at the slot end face and insulate the adjacent end surface parts of the end face of the laminated core (B).

3. Insulation arrangement according to Claim 1 and/or Claim 2,
- having second side wall parts (S3; S4) which can be folded away from the first side wall parts (S1; S2) radially on the outside and insulate the inner surfaces of the slot closures.

4. Insulation arrangement according to Claim 3,
- having third end surface wall parts (ST5-ST8) which can be folded away from the second side wall parts (S3; S4) on the slot end face and insulate the adjacent end surface parts of the end face of the laminated core (B).

5. Insulation arrangement according to at least one of Claims 1-4,
- in which the fixing ends (F11, F12; F21, F22), which are in the form of forks, are fixed in their folded end position.

6. Insulation arrangement according to Claims 2 and 5,
- in which the fixing ends (F11, F12; F21, F22) are fixed by engaging axially behind the second end surface wall parts (ST1-ST4).

7. Insulation arrangement according to at least one of Claims 1-6,
- in which the insulation body (I) is formed from a flat insulation part which surrounds all the insulation wall parts (G; S1-S4; ST1-ST10), is stamped out or cut free, and is provided with bending folds or separating cuts for the insulation wall parts which can be bent out or away.

## Revendications

1. Dispositif d'isolation entre un paquet (B) de tôles continu axialement et encoché perpendiculairement à l'axe par des encoches s'ouvrant radialement vers l'extérieur, notamment paquet de tôles rotorique et/ou paquet de tôles statorique d'un moteur électrique et un enroulement à mettre dans ces encoches (N1-N12) avec formation de têtes (SV1, SV2) d'enroulement sur les côtés frontaux du paquet de tôles,
- comprenant un corps (I) isolant, d'une seule pièce, pouvant être enfilé radialement dans chaque encoche (N1 à N12), ayant des premières et deuxièmes parties (S1, S2, S3, S4) de parois latérales et des premières et deuxième et troisièmes parties (ST9, ST10, ST1 à ST4, ST5 à ST8) de parois de surfaces frontales articulées, directement ou indirectement, du côté extérieur sur une surface (G) de base d'isolation isolant le fond de l'encoche et pouvant se replier par rapport à l'enroulement à introduire en tant qu'isolation d'au moins les surfaces intérieures à l'encoche ainsi qu'extérieures à l'encoche du paquet de tôles,
- les premières parties (S1, S2) de parois latérales isolant respectivement les surfaces latérales de l'encoche (N1 à N12) pouvant être repliées vers le haut à partir de la surface (G) de base d'isolation par leur bord extérieur axial,
- les premières parties (ST9 et ST10) de parois de surfaces frontales isolant les parties de surfaces frontales voisines des côtés frontaux du paquet (B) de tôles pouvant être pliées radialement vers l'intérieur du côté frontal de l'encoche à partir de la surface (G) de base d'isolation,
- comprenant des prolongements radiaux sous forme de parties des extrémités libres des premières parties (ST9, ST10) de parois de surfaces frontales telles que celles-ci peuvent être repliées à nouveau radialement et mises en leur position finale de pliage notamment par des extrémités (F1, F12, F21, F22) d'immobilisation en forme de fourche du côté frontal de l'encoche sur les côtés extérieurs des premières parties (S1, S2) de parois latérales.

2. Dispositif d'isolation suivant la revendication 1,
- comprenant des deuxièmes parties (ST1-ST4) de parois de surfaces frontales pouvant être pliées du côté de l'extrémité des encoches à partir des premières parties (S1, S2) de parois frontales et isolant les parties de surfaces frontales voisines des côtés frontaux du paquet (B) de tôles.

3. Dispositif d'isolation suivant la revendication 1 et/ou 2,
- comprenant des deuxièmes parties (S3, S4) de parois latérales pouvant être pliées à partir des premières parties (S1, S2) de parois latérales également du côté extérieur et isolant les surfaces intérieures de fermetures d'encoches.

4. Dispositif d'isolation suivant la revendication 3,
- comprenant des troisièmes parties (ST5-ST8) de parois de surfaces frontales pouvant être pliées à partir des deuxièmes parties (S3, S4) de parois latérales du côté de l'extrémité de l'encoche et isolant les parties de surfaces frontales voisines des côtés frontaux du paquet (B) de tôles.

5. Dispositif d'isolation suivant l'une au moins des revendications 1 à 4,
- comprenant une immobilisation des extrémités (F11, F12, F21, F22) d'immobilisation en forme de fourche en leur position finale de pliage.

6. Dispositif d'isolation suivant les revendications 5 et 2,
- comprenant une immobilisation par accrochage axial des extrémités (F11, F12, F21, F22) d'immobilisation derrière les deuxièmes parties (ST1 à ST4) de parois de surfaces frontales.

7. Dispositif d'isolation suivant au moins l'une des revendications 1 à 6,
- comprenant une formation du corps (I) d'isolation en une pièce plate d'isolation comprenant toutes les parties (G, S1, S4, ST1-ST10) de parois d'isolation estampées ou découpées et munies de plis de coudage ou de découpe de séparation pour les parties de parois d'isolation qui peuvent être coudées.
